## Europäisches Patentamt
## European Patent Office
## Office européen des brevets

(19)

(11) Veröffentlichungsnummer: **0 008 364**

**A1**

# EUROPÄISCHE PATENTANMELDUNG

(21) Anmeldenummer: **79102484.7**

(22) Anmeldetag: **16.07.79**

(51) Int. Cl.³: **B 25 B 29/02**
**G 21 C 13/06**

(30) Priorität: **14.08.78 DE 2835687**

(43) Veröffentlichungstag der Anmeldung:
**05.03.80 Patentblatt 80/5**

(84) Benannte Vertragsstaaten:
**CH FR SE**

(71) Anmelder: **KRAFTWERK UNION AKTIENGESELLSCHAFT c/o SIEMENS AG Postfach 261 D-8000 München 22(DE)**

(72) Erfinder: **Exner, Gerhard Waltersdorfer Chaussee 41a D-1000 Berlin 47(DE)**

(72) Erfinder: **Festinori, Volfango Hasenheide 58 D-1000 Berlin 61(DE)**

(54) Vorrichtung zum Spannen von mehreren, auf einem Lochkreis angeordneten Schraubenbolzen, die zum Verschluss von Druckgefässen, insbesondere Reaktordruckgefässen, dienen.

(57) Eine Vorrichtung zum Spannen von mehreren, auf einem Lochkreis angeordneten Schraubenbolzen (2), die zum Verschluß von Druckgefäßen, insbesondere Reaktordruckgefäßen, dienen, enthält ein Traggestell mit Aussparungen zur Aufnahme der Schraubenbolzen (2), Muttern (6) und gegebenenfalls Zugbolzen (8), gesonderte Drehaggregate (5, 7) für die Muttern (6) bzw. Zugbolzen (8) und hyraulisch betätigbare Spannmittel (10) zum Längen der Schraubenbolzen (2).

Zur Erzielung einer Gewichtsersparnis sind jeweils für einen Schraubenbolzen (2) dienende Vorrichtungselemente (3) mit den notwendigen Drehaggregaten (5,7) und hydraulischen Spannmitteln (10,11) in einem gesonderten, den Schraubenbolzen (2) umgebenden Tragkörper (4) mit den notwendigen Aussparungen untergebracht. Diese Tragkörper (4) sind mit seitlichen (sich in radialer Richtung erstreckenden) Aufhängevorrichtungen (20, 21) versehen, über welche sie in ein Tragmagazin (14) eingehängt werden, das aus mindestens zwei in Abstand zueinander liegenden, ein Toroid (15, 16) bildenden Profilen besteht, die eine genaue Ausrichtung der zwischen ihnen hängenden Vorrichtungselemente (3) entsprechend der Lage der Schraubenbolzen (2) auf dem Lochkreis zulassen.

./...

Croydon Printing Company Ltd.

EP 0 008 364 A1

FIG 1

KRAFTWERK UNION AKTIENGESELLSCHAFT    Unser Zeichen
Mülheim/Ruhr                          VPA 78 P 9371

**Vorrichtung zum Spannen von mehreren, auf einem Lochkreis angeordneten Schraubenbolzen, die zum Verschluß
von Druckgefäßen, insbesondere Reaktordruckgefäßen, dienen**

Die Erfindung betrifft eine Vorrichtung zum Spannen von
mehreren, auf einem Lochkreis angeordneten Schraubenbolzen, die zum Verschluß von Druckgefäßen dienen, bestehend aus einem Traggestell mit Aussparungen zur Aufnahme der Schraubenbolzen, Muttern und gegebenenfalls
Zugbolzen, aus gesonderten Drehaggregaten für die Muttern
bzw. Zugbolzen und aus hydraulisch betätigbaren Spannmitteln zum Längen der Schraubenbolzen. Eine derartige
Schraubenspannvorrichtung ist aus der US-PS 3 877 326
bekannt. Bei dieser bekannten Schraubenspannvorrichtung
besteht das Traggestell aus einem Tragring, der Aussparungen zur Aufnahme der Schraubenbolzen und Muttern
enthält und sich auf dem Deckel des Druckgefäßes abstützt.
Die zur Erzeugung der Schraubenvorspannung notwendigen
Spannkräfte werden durch diesen Tragring auf den Deckel
übertragen. Der Tragring ist somit ein verhältnismäßig
massives und schweres Konstruktionsteil.

D 3 Win / 11.8.1978

Aus der DE-AS 24 42 864 ist ferner bekannt, den Tragring in mehrere Segmente zu teilen. Diese Tragringteilung dient dem Transport, der Fertigung und dem Einsatz der Schraubenspannvorrichtung dort, wo beim Abheben der Schraubenspannvorrichtung vom Druckgefäß andere Bauteile im Wege stehen, so daß die Schraubenspannvorrichtung im Durchmesser vergrößert werden muß, um an den vorstehenden Bauteilen vorbei bewegt werden zu können.

Der Erfindung liegt die Aufgabe zugrunde, eine Gewichtsersparnis zu erzielen, ohne die Wirksamkeit der Vorrichtung und die Schnelligkeit ihres Einsatzes zu beeinträchtigen.

Zur Lösung dieser Aufgabe ist eine Vorrichtung der eingangs beschriebenen Art gemäß der Erfindung so ausgebildet, daß jeweils für einen Schraubenbolzen dienende Vorrichtungselemente mit den notwendigen Drehaggregaten und hydraulischen Spannmitteln in einem gesonderten, den Schraubenbolzen umgebenden Tragkörper mit den notwendigen Aussparungen untergebracht sind, und daß diese Tragkörper mit seitlichen (sich in radialer Richtung erstreckenden) Aufhängevorrichtungen versehen sind, über welche sie in ein Tragmagazin eingehängt werden, das aus mindestens zwei in Abstand zueinander liegenden, ein Toroid bildenden Profilen bestehen, die eine genaue Ausrichtung der zwischen ihnen hängenden Vorrichtungselemente entsprechend der Lage der Schraubenbolzen auf dem Lochkreis zulassen.

Jedem einzelnen Schraubenbolzen ist also jetzt ein gesondertes Schraubenspannelement mit eigenem Tragkörper zugeordnet, der die zum Spannen notwendigen Kräfte auf den Deckel des Druckgefäßes überleitet. Diese Schraubenspannelemente sind so beweglich, daß sie Teilungsfehler, Toleranzen usw. durch Lageveränderung ausgleichen können.

- 3 -        VPA 78 P 9371 BRD

Das gemeinsame Tragmagazin hat dagegen nur die Aufgabe, den gleichzeitigen Transport sämtlicher Vorrichtungselemente, d. h. Schraubenspannelemente, zu übernehmen und deren genaue Ausrichtung zueinander zu gewährleisten, ohne daß infolge seiner Steifigkeit im Deckel beim Spannen Reaktionskräfte auftreten. Die Schraubenspann- elemente sind im Tragmagazin vielmehr kraftlos mittels Aufhängevorrichtungen eingehängt und passen sich den Verformungen des Deckels beim Spannen an. Der Fachmann hat bei der Schraubenspannvorrichtung gemäß der Erfindung die Möglichkeit, die Anzahl der jeweils gleichzeitig zu spannenden Schraubenbolzen frei zu wählen, indem eine ent- sprechende Anzahl von einzelnen Schraubenspannelementen in das Tragmagazin eingehängt wird, wobei entstehende Lücken, z. B. durch Schraubenmagazine, ausgefüllt werden können.

Um für das Tragmagazin bei geringstem Gewicht eine möglichst große Steifigkeit zu erhalten, empfiehlt es sich, jedes Toroid des Tragmagazins aus übereinander liegenden Profilen zu bilden, wobei insbesondere Hohlprofile verwendet sein können.

Ferner ist es vorteilhaft, zumindest eine der Aufhängevorrichtung eines Vorrichtungselementes in der Höhe verstellbar auszubilden. Um die Bewegungen der einzelnen Schraubenspannelemente besser kontrollieren zu können, wird man in zweckmäßigerweise die Aufhängevorrichtungen in Schwerpunktshöhe des Schraubenspannelementes anordnen.

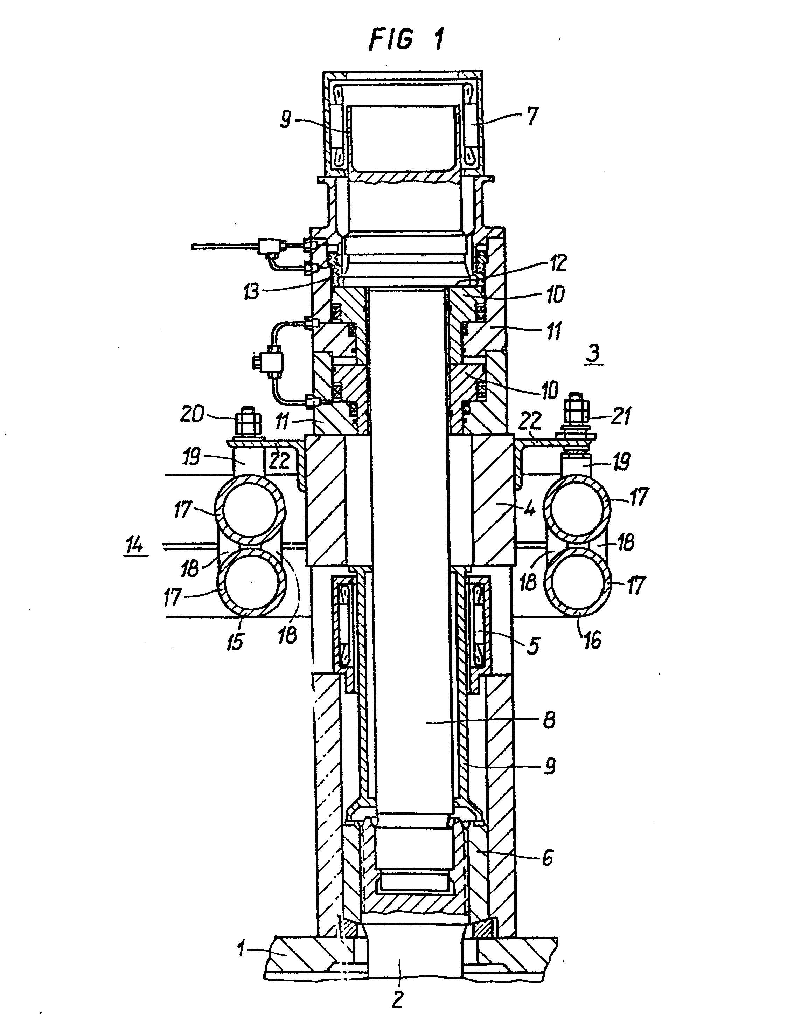

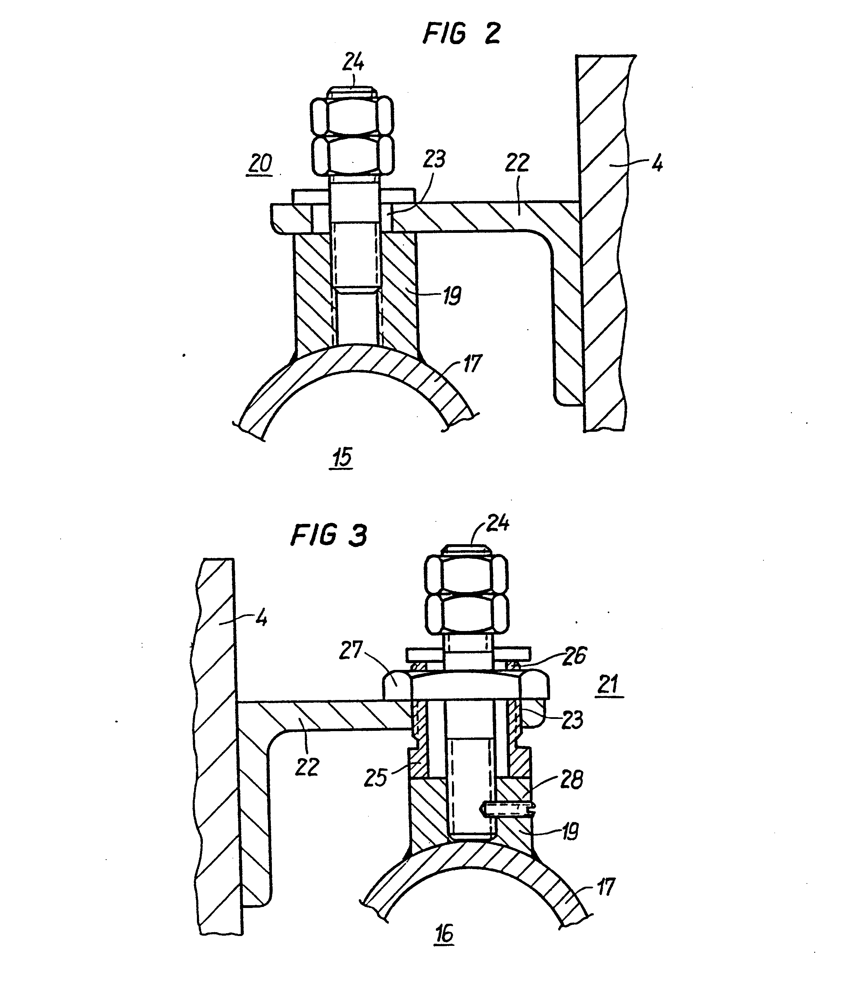

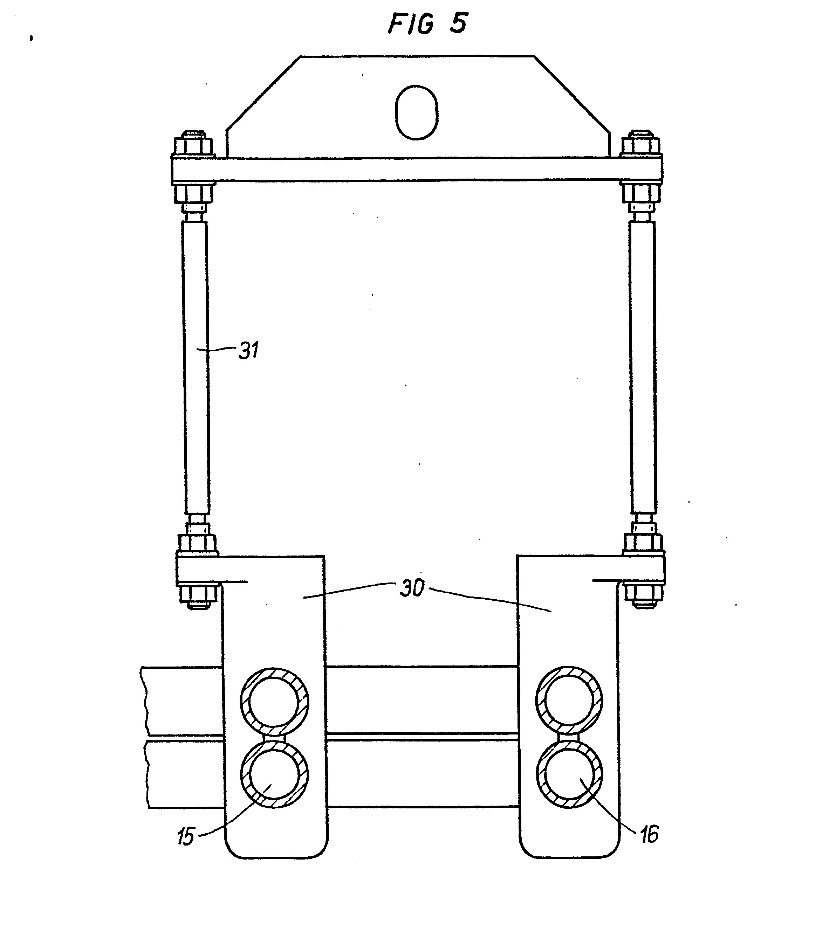

Im folgenden sei die Erfindung anhand des in den Fig. 1 bis 5 dargestellten Ausführungsbeispiels noch näher er. läutert. Die Fig. 1 zeigt schematisch einen Längsschnitt durch ein gemäß der Erfindung ausgebildetes Vorrichtungselement und das Tragmagazin. In der Fig. 2 ist ein Schnitt durch die Aufhängevorrichtung zum innenliegenden Toroid des Tragmagazins, in Fig. 3 ein Schnitt durch die Aufhängevorrichtung zum außenliegenden Toroid dargestellt.

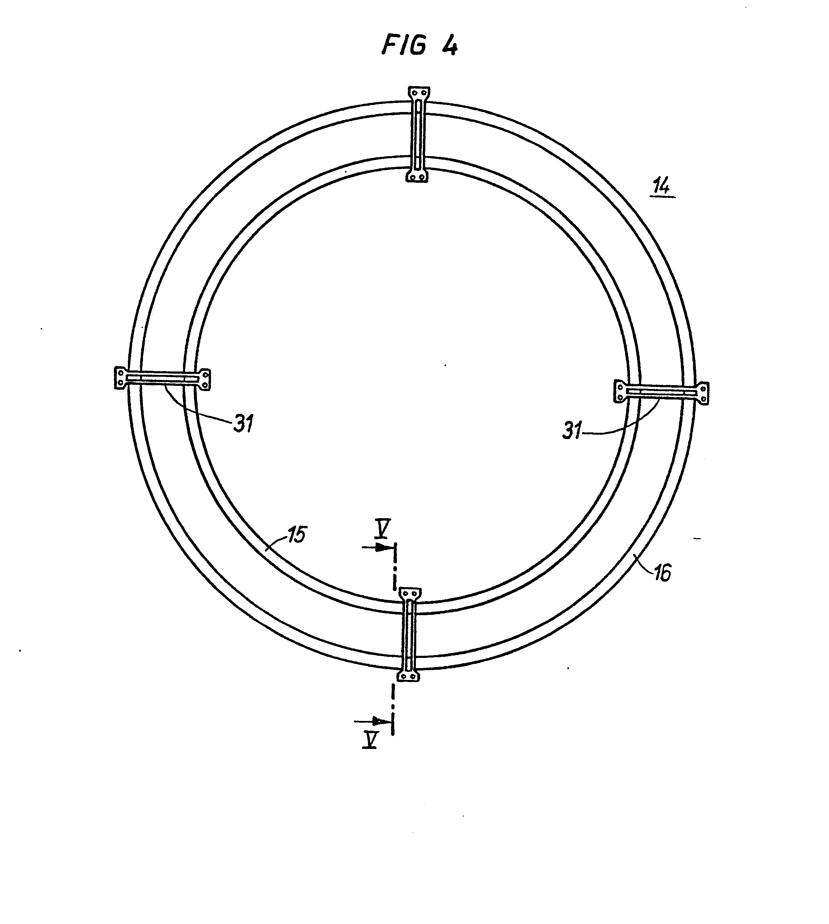

Die Fig. 4 zeigt schematisch die das Tragmagazin bildenden
Toroide ohne Aufhängevorrichtung bzw. Vorrichtungselemente und in Fig. 5 ist ein Schnitt entlang der Linie V-V
in Fig. 4 dargestellt.

Der Deckel 1 eines Reaktordruckbehälters wird durch
Schraubenbolzen 2 verschlossen, denen eine festgelegte
Vorspannung gegeben ist, um die Dichtheit des Reaktordruckbehälters zu garantieren. Diese Vorspannung erreicht
man durch Längung des Schraubenbolzens 2 mittels des aufgesetzten Schraubenspannelementes 3, dessen Tragkörper 4
den Schraubenbolzen 2 konzentrisch umgibt. Am Tragkörper 4
ist außerdem als Drehaggregat ein Elektromotor 5 angeordnet zum Drehen der Mutter 6 und ein zweiter Elektromotor 7 zum Drehen des in den Schraubenbolzen 2 eingeschraubten Zugbolzens 8. Sowohl die Mutter 6 als auch der
Zugbolzen 8 laufen an ihrem oberen Ende zu einem hülsenartigen Ansatz 9 aus, der jeweils den Läufer des Elektromotors 5 bzw. 7 bildet.

Das Schraubenspannelement 3 enthält weiterhin hydraulisch
betätigte, den Zugbolzen 8 umgebende Hubkolben 10, die in
entsprechenden Hubzylindern 11 liegen. Die Hubkolben 10
wirken auf einen Ansatz 12 des Zugbolzens 8 ein, so daß
der Schraubenbolzen 2 gelängt werden kann, um die erforderliche Vorspannung zu erhalten. Die dabei auftretenden
Kräfte werden über den Tragkörper 4 auf den Deckel 1 des
Reaktorgefäßes geleitet. Ein Rückholkolben 13 führt die
Hubkolben 10 wieder in ihre Ausgangslage zurück.

Da das Öffnen und Verschließen des Deckels 1 des Reaktorgefäßes in möglichst kurzen Zeiten durchgeführt werden
soll, ist ein gemeinsamer Transport und eine genaue Ausrichtung der einzelnen Schraubenspannelemente 3 für die auf einem Lochkreis angeordneten Schraubenbolzen 2 notwendig, damit diese beim Aufsetzen sofort genau über die Schraubenbolzen 2 passen und auch keine Verkantungen auftreten. Dies wird durch ein Tragmagazin 14 gewährleistet, in das die einzelnen Schraubenspannelemente 3 kraftlos eingehängt sind.

Das Tragmagazin 14 besteht aus zwei in Abstand zueinander liegenden Toroiden 15 und 16, nämlich dem innenliegenden Toroid 15 und dem außenliegenden Toroid 16, die jeweils aus zwei übereinander angeordneten Rohren 17 gebildet sind, die über Abstandsstücke 18 in ihrer gegenseitigen Lage fixiert sind. Auf den obenliegenden Rohren 17 sind jeweils entsprechend den Teilungen der Schraubenbolzen 2 auf dem Lochkreis ringförmige Augen 19 mit Innengewinde aufgeschweißt. Diese Augen 19 dienen als Aufnahmeteil für die Aufhängevorrichtungen 20 am inneren Toroid 15 und die Aufhängevorrichtungen 21 am äußeren Toroid 16, wobei jedem Schraubenspannelement 3 jeweils vier Augen 19 zugeordnet sind.

Um das Schraubenspannelemente 3 in das Tragmagazin 14 einzuhängen, sind an dem Tragkörper 4 in Schwerpunktshöhe Winkelstücke 22 befestigt, die jeweils eine Bohrung 23 zur Aufnahme der Aufhängevorrichtungen 20 bzw. 21 enthalten. Die Aufnahmevorrichtung 20 für das innenliegende Toroid 15 ist nicht in der Höhe einstellbar, richtet sich aber seitlich selbst aus beim Aufsetzen des Schraubenspannelementes 3 auf den Schraubenbolzen 2. Dazu weist die Bohrung 23 einen größeren Durchmesser als der Außendurchmesser eines Bolzens 24 auf, der in das Gewinde des Auges 19 eingeschraubt wird.

Dagegen läßt sich die leichter zugängliche Aufhängevorrichtung 21 bei dem außenliegenden Toroid 16 in ihrer Höhe einstellen. Zu diesem Zweck ist auf das Auge 19 ein Bolzen 25 mit Innenbohrung gesetzt, welcherdie Bohrung 23 des Winkelstückes 22 durchsetzt und ein Außengewinde 26 aufweist. Mit der Mutter 27, die auf der Oberfläche des Winkelstückes 22 aufliegt, läßt sich die Höhe des Bolzens 25 gegenüber dem Winkelstücke 22 beliebig einstellen, so daß die Höhenlage des Rohres 17 gegenüber dem Winkelstück 22 ausgerichtet werden kann. Zur Verbindung zwischen der Aufhängevorrichtung 21 und dem Auge 19 dient wiederum ein Bolzen 24, der in das Gewinde des Auges 19 eingeschraubt ist und mit Hilfe eines Stiftes 28 gegen Verdrehung gesichert wird. Die Muttern 29 dieser Bolzen 24 stützen sich nach dem Absetzen der Schraubenspannvorrichtung auf den Deckel 1 jeweils auf die Winkelstücke 22 ab und halten somit das Tragmagazin 14 in seiner Lage.

Für die Herstellung des Tragmagazins 14 werden auf den Rohren 17 zunächst Segmente der Toroide 15 und 16 geformt und jeweils zwei Rohre übereinander mit den Abstandsstücken 18 fixiert. Über diese Segmente der Toroide 15, 16 werden dann die einteiligen Haltestücke 30 (siehe Fig.5) zur Befestigung der Aufhängeösen 31 für den Krananschlag geschoben. Danach werden die Segmente zu den Toroiden zusammengeschweißt und die Aufhängeösen 31 mit den Haltestücken in genau gleichmäßig längs des Umfanges verteilten Stellen ausgerichtet.

Das aus den Toroiden 15, 16 gebildete Tragmagazin 14 ist durch den Aufbau aus Rohren 17 bei nur geringem Gewicht sehr steif. Es braucht nur beim Transport der Schraubenspannelemente 13 deren Gewicht aufzunehmen. Über die genau in der der Anzahl der Schraubenbolzen entsprechenden Teilung angeordneten Augen 19 und die Aufhängevorrichtungen 20 und 21 werden die Schraubenspannelemente 13 in das Tragmagazin eingehängt und genau in ihrer Lage ausgerichtet. Es ist nicht notwendig, daß für jeden am Deckel 1 des Reaktorgefäßes vorhandenen Schraubenbolzen 2 ein eigenes Schraubenspannelement 3 vorhanden ist. Man kann z. B. jeweils nur für jeden zweiten Schraubenbolzen 2 ein Schraubenspannelement 3 einhängen, so daß zum Öffnen oder Verschließen des Deckels 1 jeweils nur die Hälfte aller Schraubenbolzen 2 in einem Arbeitsgang betätigt wird, dnach ist dann das Tragmagazin 14 wieder von diesen Schraubenbolzen abzuheben und um eine Teilung zu verdrehen, damit die restlichen Schraubenbolzen 2 betätit werden können. Die dann zwischen den einzelnen Schraubenspannelementen 3 im Tragmagazin 14 vorhandenen Lücken können durch Schraubenmagazine oder Abstandsstücke ausgefüllt sein.

8 Ansprüche
5 Figuren

0008364

- 1 -    VPA 78 P 9371 BRD

Patentansprüche

1. Vorrichtung zum Spannen von mehreren, auf einem Lochkreis angeordneten Schraubenbolzen, die zum Verschluß von Druckgefäßen, insbesondere Reaktordruckgefäßen, dienen, bestehend aus einem Traggestell mit Aussparungen zur Aufnahme der Schraubenbolzen, Muttern und gegebenenfalls Zugbolzen, aus gesonderten Drehaggregaten für die Muttern bzw. Zugbolzen und aus hydraulisch betätigbaren Spannmitteln zum Längen der Schraubenbolzen, d a d u r c h g e k e n n z e i c h n e t , daß jeweils für einen Schraubenbolzen (2) dienende Vorrichtungselemente (3) mit den notwendigen Drehaggregaten (5,7) und hydraulischen Spannmitteln (10,11) in einem gesonderten, den Schraubenbolzen (2) umgebenden Tragkörper (4) mit den notwendigen Aussparungen untergebracht sind, und daß diese Tragkörper (4) mit seitlichen (sich in radialer Richtung erstreckenden) Aufhängevorrichtungen (20,21)versehen sind, über welche sie in ein Tragmagazin (14) eingehängt werden, das aus mindestens zwei in Abstand zueinander liegenden, ein Toroid (15,16) bildenden Profilen besteht, die eine genaue Ausrichtung der zwischen ihnen hängenden Vorrichtungselemente (3) entsprechend der Lage der Schraubenbolzen (2) auf dem Lochkreis zulassen.

2. Vorrichtung nach Anspruch 1, d a d u r c h g e k e n n z e i c h n e t , daß jedes Toroid (15,16) des Tragmagazins aus übereinanderliegenden Profilen gebildet ist.

3. Vorrichtung nach Anspruch 1 oder 2, d a d u r c h g e k e n n z e i c h n e t , daß das Tragmagazin (14) aus Hohlprofilen besteht.

4. Vorrichtung nach Anspruch 3, d a d u r c h   g e - k e n n z e i c h n e t ,   daß als Hohlprofile Rohre (17) dienen.

5. Vorrichtung nach Anspruch 1, d a d u r c h   g e - k e n n z e i c h n e t ,   daß die Aufhängevorrich- tungen (20,21) in Schwerpunktshöhe des Vorrichtungselementes (3) angeordnet sind.

6. Vorrichtung nach Anspruch 1 oder 5, d a d u r c h   g e k e n n z e i c h n e t ,   daß zumindest eine der Aufhängevorrichtungen (21) eines Vorrichtungselementes (3) in der Höhe verstellbar ausgebildet ist.

7. Vorrichtung nach Anspruch 1 oder 5, d a d u r c h   g e k e n n z e i c h n e t ,   daß die Aufhängevorrich- tung (20,21) in ein an den Profilen (17) des Tragmagazins (14) befestigtes Aufnahmeteil (19) eingreift.

8. Vorrichtung nach Anspruch 1, d a d u r c h   g e - k e n n z e i c h n e t ,   daß am Tragmagazin (14) an gleichmäßig längs des Umfanges verteilten Stellen Auf- hängeösen (31) befestigt sind.

FIG 1

VPA 78 P 9371    1/4

0008364

FIG 2

15

FIG 3

16

FIG 4

FIG 5

0008364

## EUROPÄISCHER RECHERCHENBERICHT

| | EINSCHLÄGIGE DOKUMENTE | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| X | <u>DE - A1 - 2 648 722</u> (SKF COMPAGNIE D'APPLICATIONS MECANIQUES) <br> * Anspruch 8; Seite 9, Zeile 1 bis Seite 10, Zeile 24; Fig. 3, 1 * <br> -- | 1 | B 25 B 29/02 <br> G 21 C 13/06 |
| A | <u>DE - A1 - 2 442 798</u> (MASCHINEN- UND BOHRGERÄTEFABRIK) <br> * Ansprüche 1 bis 4; Fig. 1, 2 * <br> -- | 1 | |
| A | <u>DE - U - 1 887 299</u> (RHEINSTAHL HÜTTENWERKE AG) <br> * Ansprüche 1 bis 3; Fig. 1, 3 * <br> ---- | 1 | |

RECHERCHIERTE SACHGEBIETE (Int. Cl.³)

B 01 J 13/00
B 23 P 19/06
B 25 B 29/02
F 16 J 13/00
G 21 C 13/00

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsatze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 14-11-1979 | HOFFMANN |

EPA form 1503.1 06.78